# EUROPEAN PATENT SPECIFICATION

(11) **EP 2 853 336 B1**
(45) Date of publication and mention of the grant of the patent: **11.07.2018**
(21) Application number: 13186578.4
(22) Date of filing: 30.09.2013
(51) Int. Cl.: B23K 20/12, B23K 26/00, B24C 1/06, B23K 31/00, C21D 10/00, B23K 26/28, B23K 26/32

(54) **Method of and system for fabricating a module through welding and peening the weld seam and/or the members**
Verfahren und System zur Herstellung eines Moduls durch Schweissen und Peening der Schweissnaht und/oder der Werkstücke
Procédé et système de fabrication d'un module par soudage et grenaillage du joint soudé et/ou des pièces

(43) Date of publication of application: 01.04.2015
(73) Proprietor: Airbus Operations GmbH, 21129 Hamburg (DE)
(72) Inventor: Furfari, Domenico, 22589 Hamburg (DE); Pacchione, Marco, 22605 Hamburg (DE); Richter-Trummer, Valentin, 22767 Hamburg (DE)
(74) Representative: Isarpatent

(56) References cited:
- DE-A1-102009 051 551
- JP-A- 2005 219 079
- US-A1- 2001 052 561
- US-A1- 2005 092 724
- US-A1- 2011 248 070
- DATABASE WPI Week 201376 Thomson Scientific, London, GB; AN 2013-U72181 XP002722048, -& CN 103 246 772 A (UNIV TIANJIN) 14 August 2013 (2013-08-14)

## Description

The present invention relates to a method and a system for fabricating a module, such as a stiffened panel, for an airframe or fuselage structure of an aircraft or spacecraft, according to the preamble of claims 1 and 9 respectively (see, for example, US2011/248070 A1). The module fabricated according to the method and system of the invention comprises parts or members, typically of metal or a metal alloy, which are or may be welded together.

The method and system of the invention are thus especially suitable for use in fabrication of an airframe or fuselage structure of an aircraft or spacecraft, and it is convenient to describe the invention herein in this exemplary context. It will be appreciated, however, that the method and system of the invention are not limited to this application, but may be used to provide modules, such as panels, for the body structure of other vehicles, such as trains, automobiles, trucks or ships. Accordingly, the method and system of the invention may be suitable for a whole range of nautical, aeronautical, automotive and aerospace applications.

Current airframe and fuselage structures, including wing and tail structures of commercial aircraft, are typically built from panel modules which are joined together by means of fasteners, such as rivets. In recently developed commercial aircraft, welding has been used to join stiffener members, such as stringers, to skin panels. With current manufacturing techniques, however, the welding of stringers to skin panels often generates distortions (sometimes called the "Zeppelin effect") which need to be corrected in separate manufacturing procedures. In other words, the welded and stiffened panels need to be transferred or transported to other processing stations for further treatment and this in turn significantly increases the workload and the lead times for the overall manufacturing process of integrally stiffened panel modules in aircraft manufacture.

Examples of welding techniques are described in the published patent application nos. US 2011/248070 A1, US 2005/092724 A1, JP 2005-219079 A, CN 103 246 772 A, DE 10 2009 051551 A1 and US 2001/052561 A1.

It is therefore an object of the present invention to provide a new and improved method and system for overcoming one or more of the problems discussed above. In particular, it would be useful to provide a new method of fabricating a module for an airframe or fuselage structure of an aircraft which may enable a faster and/or more automated production procedure. In accordance with the invention, a method and a system of producing a module, such as a panel module or shell section, for an airframe or fuselage structure as recited in claim 1 and claim 9, respectively, is provided. Preferred features are recited in the dependent claims.

In a particularly preferred embodiment, the step of treating the first member, the second member, and/or the welded joint at the work station or assembly station to compensate for, or to correct, distortion caused by the welding comprises laser peening (also called "laser shock peening" (LSP) or "laser shot peening"); that is, the first member, the second member, and/or the welded joint may be laser peened. Laser peening is a process of hardening or peening metal using a powerful laser and typically involves generating high amplitude shock waves which are applied to a selected region of the module. The peak pressure of the shock waves typically exceeds the dynamic yield strength of a material of the module, i.e. the material of at least one of the first member, the second member, and/or the welded joint to which the shock waves are applied, and this in turn produces the laser peening effect. In a preferred embodiment, therefore, each of the first member and the second member is comprised of metal or metal alloy, such as an aluminium alloy. The laser peening may preferably also be employed to induce compressive stresses in the module, which may inhibit fatigue-induced weaknesses in the material. Laser peening can impart a layer of residual compressive stresses in a surface that is four times deeper than that which is attainable from conventional shot peening treatments.

In a particularly preferred embodiment, the step of treating the first member, the second member, and/or the welded joint at the work station or assembly station to compensate for, or to correct, distortion caused by welding includes generating residual compressive stresses in a surface region of the module; i.e. a surface region of the first member, the second member, and/or the welded joint. To this end, the technique employed to generate the residual compressive stresses in a surface region may comprise peening, including any one or more of laser peening, shot peening, and sand-blasting. While laser peening provides for a highly precise treatment of a surface region of the module, the other techniques, such as shot peening or sand-blasting, can be performed substantially faster.

In a preferred embodiment, the first member of the module is a stiffening member. For example, the first member may be an elongate member having a transverse cross-section or profile that may be e.g. I-shaped, C-shaped, Z-shaped, T-shaped, or L-shaped. The second member of the module, on the other hand, preferably comprises an area member, such as a sheet member or a panel, which may define a two- or three-dimensional surface area. As will be appreciated by persons skilled in the art, the module may include a number of first members (e.g. stiffening members) welded to the second member (e.g. an area member, sheet member, or panel).

The conventional riveting procedures used to construct and also to interconnect panel modules or shell sections in airframe and fuselage structures carries a significant weight penalty due to the need to overlap material along the riveted seams, and due to the inclusion of doublers, crack stoppers, and sealing material, not to mention the rivets themselves. Furthermore, the use of rivets is an expensive procedure despite the fact that the riveting procedures today are highly automated. As an alternative to riveting, therefore, welding has been contemplated. Conventional welding methods, however, generate distortions in the welded parts, especially in sheet members or panels, due to residual stresses induced in the material by thermal stresses during formation of the welded joint and/or due to a change in the microstructure of the material at the welded joint. These distortions in the welded parts thus require additional manufacturing operations which, in turn, result in greater lead times in airframe and fuselage structure assembly.

The present invention replaces the conventional manufacturing techniques with a method that is able to save weight and cost at same time. In particular, the present invention improves conventional assembly procedures in terms of cost reduction and time efficiency by correcting the distortion created by welding during the same manufacturing operation without generating additional lead time. That is, both the welding step and the peening step take place at the same work station or assembly station, and no separate manufacturing operations are required with the method of the invention. The present invention defines a method of fabricating a panel module for an airframe or fuselage structure of an aircraft or according to claim 1. In a preferred embodiment, the welding of the first member to the second member includes at least one of laser beam welding (LBW) and friction stir welding (FSW). Furthermore, the step of welding preferably involves butt welding or T-joint welding the first member to the second member. It will be understood that the method may include the step of clamping the first and second members together during the welding step to ensure proper positioning of the first member and the second member is maintained.

In a particularly preferred embodiment of the invention, the laser peening includes imparting laser beam pulses to one or more of the first member, the second member, and the welded joint through an overlay or coating. A coating, usually black tape or paint, may be applied to absorb the laser energy. Short energy pulses are then focused to explode the ablative coating, producing a shock wave with the laser. The beam is then repositioned and the process is repeated, creating an array of slight indentations of compression and depth with about 5-7% cold work. Preferably, a transparent overlay may also be provided. The transparent overlay may, for example, comprise a layer of liquid, such as water. The liquid may optionally flow over a surface of the module in the region of the laser shock peening. This translucent layer is provided over the coating and acts as a tamp, directing the shock wave into the treated material. In this way, the liquid may effect or perform cooling of the module in the region of the laser shock peening to prevent or limit thermal effects by the laser beam pulses. The laser peening process will typically be computer-controlled and may be repeated, e.g. as many as three times, until the desired compression level is reached, producing a compressive layer as deep as 1-2mm average.

In a preferred embodiment, the step of laser shock peening is carried out before, during and/or after the welding step. In this regard, the laser shock peening is preferably performed or carried out during the welding step (e.g. after material consolidation) to correct or counter-act the distortion in the first and/or second member caused by the welding. That is, the welding and laser peening (LSP) steps or operations may take place or be carried out substantially simultaneously or contemporaneously. It is to be noted, however, that the laser peening may also be performed or carried out before the welding step to compensate for, or counteract, subsequent deformation which occurs during or after the welding step. Alternatively, or in addition, the laser shock peening may be performed or carried out after the welding step. According to the present invention, the method comprises: measuring or sensing a distortion in the module (e.g. in either or both of the first member and second member) during and/or after the welding step; and controlling the laser peening based on the distortion of the module that is measured or sensed. The step of measuring or sensing the distortion in the module may comprise measuring or sensing reaction forces in a clamping mechanism or device for positioning and holding the first member with respect to the second member during welding. In addition, the measuring or sensing step may include detecting other property changes, such as surface strain, due to distortion of the first or second member. The size and location of the region to be laser peened may also be predicted based on welding process parameters and geometry details, thereby reducing a need for measurements during the manufacturing process.

According to another aspect, the present invention provides a system for fabricating a module, such as a stiffened panel module, for an airframe or fuselage structure of an aircraft or spacecraft, as defined in claim 9. In a preferred embodiment, the welding head includes a laser for laser beam welding (LBW). As the laser shock peening head will typically also include a laser, the laser shock peening head is preferably included in or combined with the welding head. In this regard, the welding laser may be separate or distinct from the shock peening laser.

In a particularly preferred embodiment, the frame includes a clamping device or clamping mechanism for holding the first member clamped or fixed in position with respect to the second member. Thus, where, for example, the first member is a stiffening member and the second member is a sheet member or panel, the clamping device may be configured to hold or fix an elongate stiffening member adjacent one side or facing surface of the sheet member or panel. According to the present invention, the system further comprises a sensor device or measuring device for sensing or measuring a distortion of either or both of the first and second members during welding. As noted above, and according to the present invention, the sensor device or measuring device senses or measures a distortion in the module based on reaction forces, or changes therein, in the clamping mechanism or clamping device with which the first member (e.g. stiffening member) is held with respect to the second member (e.g. panel) during welding. Thus, the sensor or measuring device may be incorporated in the clamping mechanism. In addition, the sensor or measuring device may sense or measure other property changes, such as surface strain, due to distortion of the panel or stiffener member.

For a more complete understanding of the present invention and the advantages thereof, exemplary embodiments of the invention are explained in more detail in the following description with reference to the accompanying drawings, in which like reference characters designate like parts and in which:
- Fig. 1: is a schematic perspective view of a section of a fuselage of an aircraft showing the lines of welded joints between fuselage panels or shells;
- Fig. 2: is a schematic illustration of an arrangement and welding head for friction stir welding;
- Fig. 3: is a schematic cross-sectional and perspective view of a stiffened panel which undergoes distortion due to a welded joint;
- Fig. 4: is a schematic cross-sectional view of laser shock peening of a region of a stiffened panel;

- Fig. 5: is a schematic illustration of an aircraft having a fuselage including panel modules;

- Fig. 6: is a flow diagram which schematically illustrates a method;

- Fig. 7: is a flow diagram which schematically illustrates another method; and
- Fig. 8: is a flow diagram which schematically illustrates a further method.

The accompanying drawings are included to provide a further understanding of the present invention and are incorporated in and constitute a part of this specification. The drawings illustrate particular aspects and together with the description serve to explain the principles of the invention. Other embodiments of the invention and many of the attendant advantages of the invention will be readily appreciated as they become better understood with reference to the following detailed description.

It will be appreciated that common and/or well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as is accorded to such terms and expressions with respect to their corresponding respective areas of inquiry and study, except where specific meanings have otherwise been set forth herein.

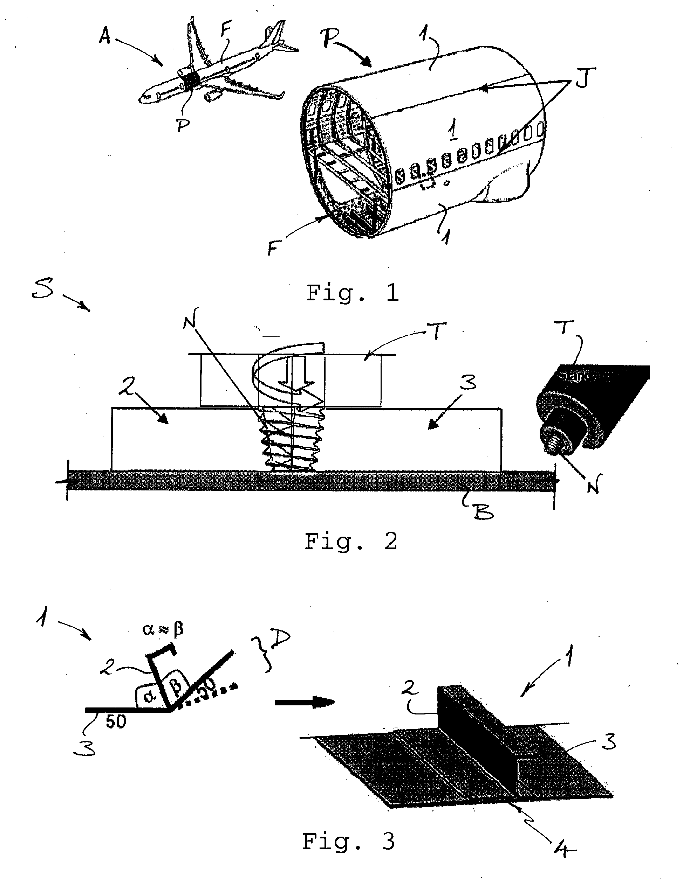

With reference firstly to Fig. 1 of the drawings, a schematic illustration of a tubular portion P of a fuselage structure F of an aircraft A is shown. The tubular portion P of the fuselage structure F of the aircraft A is assembled by interconnecting a number of panel modules or shell sections 1 with one another, including along seams or joints J extending longitudinally of the aircraft A. Conventionally, such longitudinal joints J would be formed by riveting. In the present embodiment, however, these seams or joints J are welded, preferably via butt welding, for example using friction stir welding (FSW), which is characterized by high mechanical strength properties under both static and dynamic loading.

Fig. 2 of the drawings schematically illustrates formation of a butt weld between a first member 2 and a second member 3 using a friction stir welding (FSW) tool T. Each of these first and second members 2, 3 is comprised of an aluminium alloy, and the FSW tool T acts from one side of the material at the butt joint 4 between the first and second members 2, 3, as shown. In this embodiment, the first member 2 and the second member 3 are held clamped together in the butt joint 4 in a supporting frame of an assembly station S during the welding procedure. The supporting frame includes an assembly base or table B, and the FSW tool T includes a pin or probe N which engages the first and second members 2, 3 at the butt weld 4 supported against the base B. Alternatively, however, FSW tools T in the assembly station S could act on aluminium material of the first and second members 2, 3 from opposite sides thereof at the same time, such that the tools T would be self-reacting and therefore not require a support base B.

Referring to Fig. 3 of the drawings, a simplified example of a panel module 1 is illustrated. The panel module 1 comprises a first member 2 in the form of an elongate stiffening member (e.g. a stringer) with a constant cross-sectional profile (at least over a part of its length shown), and a second member 3 in the form of an area member, such as a skin panel, that is substantially flat or plane. In a preferred embodiment of the invention, the panel module 1 is produced or fabricated by firstly positioning and holding the stiffening member 2 such that it extends in a desired orientation over or across one side of the skin panel 3. To this end, a clamping mechanism (not shown), e.g. at a panel module assembly station S, may be employed. The stiffening member 2 is then welded to the skin panel member 3. In this particular example, the weld may be formed as a T-joint, but other weld joint configurations, e.g. a butt-welded joint 4, may be contemplated depending on the geometry and arrangement of the stiffening member 2 and the skin panel 3. After welding, residual stresses induced in the aluminium material by the thermal stresses that develop during formation of the welded joint 4 and/or that are caused by a change of the material microstructure within the joint 4 can produce distortions D in the module 1. Fig. 3 of the drawings (left-hand side), for example, gives an exaggerated representation of the type of distortions D obtained after welding the stringer 2 onto the skin panel 3 (e.g. the so-called "Zeppelin effect").

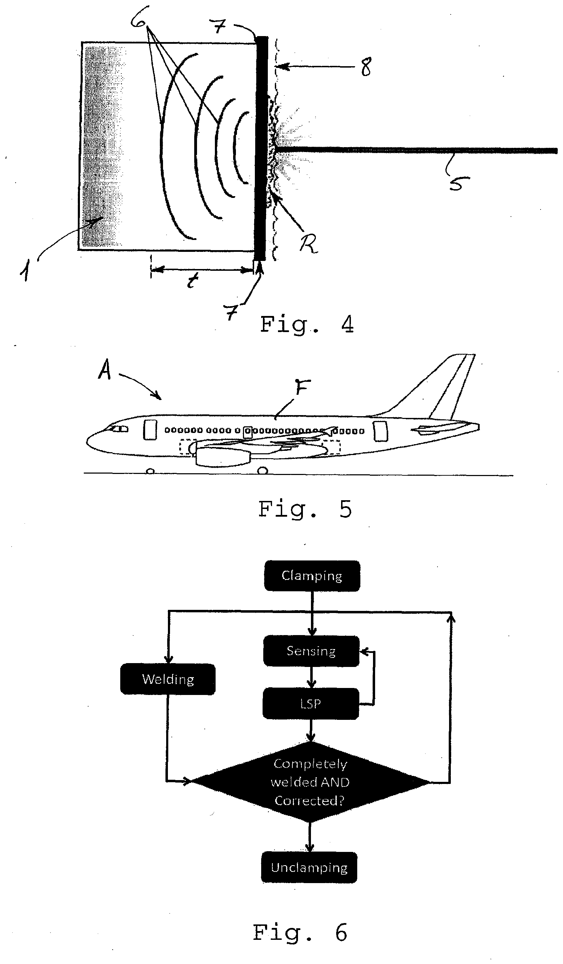

Referring now to Fig. 4 of the drawings, the panel module assembly station S of this embodiment includes a laser shock peening head or laser peening equipment for generating a high energy pulsed laser beam 5 and directing that beam 5 onto a region R of the panel module 1 after the first stiffening member (e.g. stringer) 2 has been welded to the second member (i.e. skin panel) 3. This laser beam 5 is used to drive a high amplitude shock wave 6 into the aluminium alloy material of the panel module 1 using a high impulse beam. In this regard, a coating layer 7, such as of a black tape or paint, may be applied to absorb the energy of the laser beam 5 in the peening process. Short energy pulses are then focused to explode the ablative coating, producing a shock wave 6 with the laser. The peak pressure of the shock wave 6 is greater than the yield strength of the aluminium material and produces local plastic deformation in the aluminium alloy, which induces compressive residual stresses into the depth of the material required for correction or compensation of the distortions D. The beam 5 may be re-positioned and the process repeated to create an array of slight compression indentations with about 5-7% cold work. By repeating the laser peening process over region R a number of times until a desired compression level is reached, a compressive layer with an average depth of 1-2 mm may be formed.

Undesirable thermal effects caused by the laser shock peening beam 5 in this embodiment can be avoided by providing a fluid overlay 8 which is transparent to the laser beam but confines the plasma generated. For example, the fluid overlay 8 may be in the form of a layer of water flowing over a surface of the panel 3. This liquid layer 8 provided over the coating also acts as a tamp, directing the shock wave 6 into the treated material. The non-uniform residual stress distribution that is generated through a thickness t of the aluminium material in the panel module 1 itself leads to deformation which can be precisely controlled for shape correction of the initially distorted parts. Thus, in this way, the production method of this embodiment creates substantial cost reductions and time efficiencies in that the distortions D created by the welding can be corrected in the same manufacturing operation, i.e. during welded assembly of the panel module 1 (i.e. at the panel module assembly station S or with the fabrication equipment or system) without creating additional lead time and correspondingly increased cost by separate manufacturing operations required to further process the panel modules.

Because both laser beam welding (LBW) and laser shock peening (LSP) are repeatable processes, it is conceivable that the laser shock peening via laser beam 5 would be performed or carried out during and/or directly after the welding on the still clamped structure. Alternatively, or in addition, it is conceivable that the laser shock peening via the laser beam 5 may occur or take place during welding to achieve near-zero distortion after unclamping. In such a case, the laser shock peening could be based upon expected distortion derived from previous experience with the particular welding operation. The control of the laser shock peening could also be based on a model of the welding process, and/or on measurements of the distortion generated in the first or second members 2, 3 of the module 1 during welding; for example, via reaction force measurements in the clamping mechanism or via surface strain in the panel module 1.

Fig. 5 of the drawings shows an aircraft A, having a fuselage structure F which incorporates a number of panel modules 1 that have been fabricated according to the method of the invention, such as described above with reference to drawing Figs. 1 to 4. Referring now to Fig. 6 of the drawings, a flow diagram is shown that schematically illustrates the steps in a method of fabricating a panel module 1 for the airframe or fuselage structure F of the aircraft A described above with respect to Figs. 1 to 4. In this regard, the first box of Fig. 6 labelled "clamping" represents the step of positioning and clamping the first member 2 (i.e. elongate stiffening member or stringer 2) at the assembly station S so that it extends over one side or surface of the area member or skin panel 3. After positioning and clamping the first and second members 2, 3, the method of Fig. 6 includes steps or procedures that run or are carried out in parallel. The box at the left-side labelled "welding" represents the step of welding the stiffening member 2 to the panel 3 to produce a panel module 1 having a welded joint 4 between the stringer 2 and the skin panel 3; e.g. a T-joint 4 that extends the length of the stringer 2. During the welding step, one or more sensors provided on the stringer 2, on the skin panel 3, and/or in the clamping mechanism and associated measuring equipment act to simultaneously sense and measure deformation occurring in the module 1 as a result of the welding, as denoted by the box labelled "sensing". Based on the deformation D detected or sensed by the sensors, the box labelled "LSP" represents the step of laser shock peening the panel module 1 (i.e. region R of the stringer 2 or panel 3) via a laser beam 5 to correct or to compensate for that deformation D. A feed-back loop in the process controller represented by the diamond-shaped box in Fig. 6 assesses the progress of the welding step and the LSP deformation correction (e.g. via the sensors). If the welding and/or the LSP distortion correction is not yet complete, both of these parallel process steps continue. Once the feed-back loop of the process controller determines that both welding of the first and second members 2, 3 and the deformation correction of the module 1 is complete, the final box in Fig. 6 of the drawings labelled "unclamping" then represents the step of releasing the completely welded and deformation corrected panel module 1 from the clamping mechanism at the assembly station S.

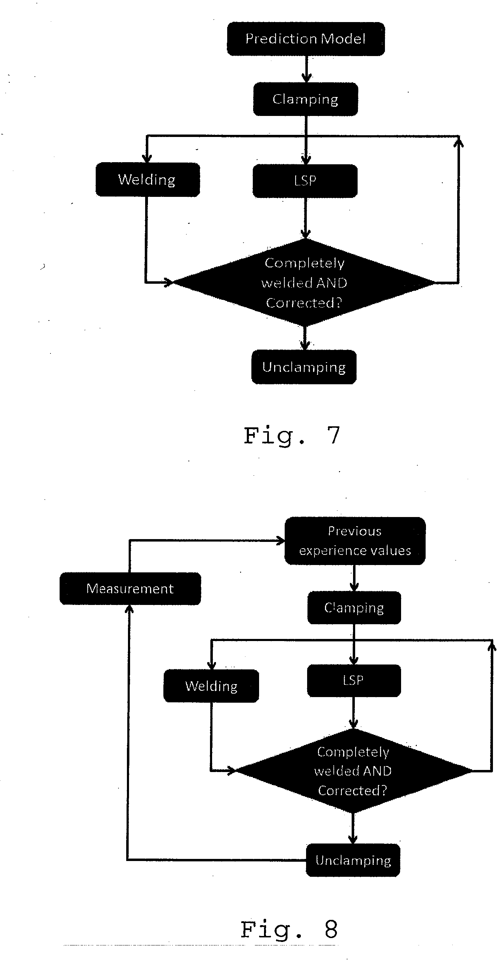

Fig. 7 of the drawings shows a flow diagram that illustrates a method of forming or fabricating a panel module 1 for the airframe or fuselage structure F of the aircraft A. The method in this case involves, or is based on, the use of a model, i.e. a prediction model, to estimate the extent and/or degree of deformation to occur during welding. As before, after the "clamping" step, the "welding" step and the laser peening (i.e. "LSP") step take place or are carried out in parallel or simultaneously. In this case, though, instead of directly measuring or sensing the deformation D in the module 1 caused by welding, the prediction model is used as the basis for controlling and carrying out the laser shock peening (LSP) of the members of the panel module 1 to correct or compensate for deformation. Again, a feed-back loop in the process controller represented by the diamond-shaped box in Fig. 7 assesses the progress of the welding and the LSP steps. Once the controller determines that both the welding step and LSP step have been completed, the panel module 1 is released or unclamped from the clamping mechanism at the assembly station S.

Fig. 8 of the drawings shows a flow diagram that illustrates a method of forming or fabricating a panel module 1. In this case, the method uses or is based upon previous experience values in the production or fabrication of other modules 1, instead of the prediction model in the method of Fig. 7. In other words, the "previous experience values" are used as the basis for controlling and carrying out the laser shock peening (LSP) of the members of the panel module 1 to correct or compensate for deformation. In other respects, however, the method of Fig. 8 corresponds largely to the method of Fig. 7. The other difference is the fact that, at the end of the method shown schematically in Fig. 8, values denoting extent and degree of the LSP employed in the specific method are recorded in the step represented by the box labelled "measurement" and are fed back into the box "previous experience values" to contribute to the control of subsequent production runs.

Although the embodiments of the method shown schematically in Figs. 6 to 8 employ different techniques to control LSP for correction or compensation of deformations caused by welding, it will be appreciated that any two or more of the techniques or steps may be used in combination also.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

### List of Reference Signs

- 1: panel module
- 2: first member or stringer
- 3: second member or skin panel
- 4: welded joint
- 5: laser beam
- 6: shock wave
- 7: opaque coating or overlay
- 8: fluid coating or overlay
- A: aircraft
- F: fuselage structure
- P: tubular portion
- J: seam or joint
- T: FSW tool
- N: pin or probe
- S: assembly station
- B: assembly base or table
- D: distortion
- R: surface region of panel module
- t: thickness of peened region

## Claims

1. A method of fabricating a module (1) for an airframe or fuselage structure (F) of an aircraft (A) or spacecraft, comprising the steps of:
positioning and clamping a first member (2) adjacent to a second member (3) in a frame of an assembly station (S);
welding the first member (2) to the second member (3) at the assembly station (S) to produce a module (1) having a welded joint (4) between the first and second members (2, 3);
peening, especially laser peening, at least one of the first member (2), the second member (3), and the welded joint (4) at the assembly station (S) to correct or compensate for distortion (D) caused by the welding;
and **characterised by** the following steps :
sensing or measuring the distortion (D) of either or both of the first and second members (2, 3) during the welding with a sensing device or a measuring device;
controlling the peening based on the sensed or measured distortion of the module, which are measured or previously acquired experimental data of the welding; and;
wherein the sensor device or the measuring device senses and measures the distortion (D) occurring in the module (1) as a result of the welding at least one of during and/or after the welding based on a clamping reaction force of the holding in the frame on the module (1).

2. A method according to claim 1, wherein the peening step is carried out before, during and/or after the welding step.

3. A method according to claim 2, wherein the first member (2) is a stiffening member, such as an elongate member with a regular transverse cross-section or profile; and wherein the second member (3) is an area member, such as a panel, with a two- or three-dimensional major surface.

4. A method according to any of claims 1 to 3, wherein the peening step includes generating residual compressive stresses in a surface region of the module; preferably by any one or more of laser peening, shot peening, and sand-blasting; and/or
wherein laser peening comprises generating a shock wave (6) in a region of at least one of the first member (2), the second member (3), or the welded joint (4) via a laser beam (5), such that a peak pressure of the shock wave (6) exceeds a dynamic yield strength of a material of the module.

5. A method according to any of claims 1 to 4, wherein the peening step includes imparting laser beam pulses to at least one of the first member (2), the second member (3), and/or the welded joint (4) of the module through a coating (7) and/or an overlay (8), wherein the overlay (8) preferably comprises a liquid layer, such as water.

6. A method according to any of claims 1 to 5, comprising:
clamping the first member (2) to the second member (3) during the welding step; and
measuring or sensing a distortion (D) of the module (1) during and/or after the welding step from a clamping reaction force.

7. A method according to any of claims 1 to 6, comprising:
measuring or sensing a distortion (D) of the module (1) during and/or after the welding step; and
controlling the peening based on the measured or sensed distortion (D) of the module (1).

8. A method according to any of claims 1 to 7, wherein the step of welding the first member (2) to the second member (3) comprises at least one of laser beam welding (LBW) and friction stir welding (FSW); and/or wherein the welding step comprises butt welding the first member (2) to the second member (3).

9. A system for fabricating a module (1) for an airframe or fuselage structure (F) of an aircraft (A) or spacecraft, comprising:
a frame for positioning and holding a first member (2) with respect to an adjacent a second member (3);
a welding head for producing a welded joint (4) between the first member (2) and the second member (3) held by the frame;
a treatment head, especially a laser shock peening head, to correct or compensate for distortion (D) in the module caused by a welding;
charactersied by :
a device for sensing or measuring the distortion (D) of either or both of the first and second members (2, 3) during the welding;
a computer controller for controlling the laser shock peening head based on the sensed or measured distortion of the module, which are measured or previously acquired experimental data of the welding; and
wherein the sensor device or the measuring device senses and measures the distortion occurring in the module as a result of the welding at least one of during and/or after the welding based on a clamping reaction force of the holding in the frame on the module (1).

10. A system according to claim 9, wherein the welding head includes a laser or laser emitter for laser beam welding (LBW), wherein the laser shock peening head is included in the welding head.

11. A system according to claim 9 or claim 10, wherein the frame includes a clamping device for holding the first member (2) clamped or fixed to the second member (1).

12. A system according to claim 11, wherein the computer controller controls the laser shock peening head based on the sensed or measured distortion (D) of the module (1) .

## Patentansprüche

1. Verfahren zur Herstellung eines Moduls (1) für eine Airframe- oder Rumpfstruktur (F) eines Flugzeugs (A) oder Raumfahrzeugs, umfassend die folgenden Schritte:
Positionieren und Festklemmen eines ersten Elements (2) neben einem zweiten Element (3) in einem Rahmen einer Montagestation (S);
Schweißen des ersten Elements (2) an das zweite Element (3) in der Montagestation (S), um ein Modul (1) herzustellen, das eine Schweißfuge (4) zwischen dem ersten und dem zweiten Element (2, 3) aufweist;
Strahlen, insbesondere Laserstrahlen, mindestens eines des ersten Elements (2), des zweiten Elements (3) und der Schweißfuge (4) in der Montagestation (S) zum Korrigieren oder Kompensieren eines durch das Schweißen verursachten Verziehens (D);
und **gekennzeichnet durch** die folgenden Schritte:
Abfühlen oder Messen des Verziehens (D) des ersten und/oder des zweiten Elements (2, 3) während des Schweißens mit einer Abfühlvorrichtung oder einer Messvorrichtung;
Steuern des Strahlens auf der Basis des abgefühlten oder gemessenen Verziehens des Moduls, die gemessene oder zuvor gewonnene experimentelle Daten des Schweißens sind; und
wobei die Sensorvorrichtung oder die Messvorrichtung das Verziehen (D) abfühlt und misst, das in dem Modul (1) infolge des Schweißens während und/oder nach dem Schweißen aufgrund einer Klemmreaktionskraft des Haltens in dem Rahmen an dem Modul (1) auftritt.

2. Verfahren nach Anspruch 1, wobei der Strahlschritt vor, während und/oder nach dem Schweißschritt ausgeführt wird.

3. Verfahren nach Anspruch 2, wobei das erste Element (2) ein Versteifungselement ist, wie zum Beispiel ein längliches Element mit einem regelmäßigen Querschnitt oder Profil; und wobei das zweite Element (3) ein Flächenelement, wie zum Beispiel ein Paneel, mit einer zwei- oder dreidimensionalen Hauptfläche ist.

4. Verfahren nach einem der Ansprüche 1 bis 3, wobei der Strahlschritt das Erzeugen von Restdruckspannungen in einer Oberflächenregion des Moduls umfasst; bevorzugt durch Laserstrahlen und/oder Kugelstrahlen und/oder Sandstrahlen; und/oder
wobei das Laserstrahlen umfasst, eine Stoßwelle (6) in einer Region des ersten Elements (2) und/oder des zweiten Elements (3) und/oder der Schweißfuge (4) mittels eines Laserstrahls (5) zu erzeugen, dergestalt, dass ein Spitzendruck der Stoßwelle (6) eine dynamische praktische Fließgrenze eines Materials des Moduls übersteigt.

5. Verfahren nach einem der Ansprüche 1 bis 4, wobei der Strahlschritt umfasst, Laserstrahlimpulse auf das erste Elements (2) und/oder das zweite Element (3) und/oder die Schweißfuge (4) des Moduls durch eine Beschichtung (7) und/oder einen Überzug (8) hindurch zu richten, wobei der Überzug (8) bevorzugt eine Flüssigkeitsschicht, wie zum Beispiel Wasser, umfasst.

6. Verfahren nach einem der Ansprüche 1 bis 5, das Folgendes umfasst:
Festklemmen des ersten Elements (2) an dem zweiten Element (3) während des Schweißschrittes; und
Messen oder Abfühlen eines Verziehens (D) des Moduls (1) während und/oder nach dem Schweißschritt anhand einer Klemmreaktionskraft.

7. Verfahren nach einem der Ansprüche 1 bis 6, das Folgendes umfasst:
Messen oder Abfühlen eines Verziehens (D) des Moduls (1) während und/oder nach dem Schweißschritt; und
Steuern des Strahlens auf der Basis des gemessenen oder abgefühlten Verziehens (D) des Moduls (1).

8. Verfahren nach einem der Ansprüche 1 bis 7, wobei der Schritt des Schweißens des ersten Elements (2) an das zweite Element (3) Laserstrahlschweißen (LBW) und/oder Reibrührschweißen (FSW) umfasst; und/oder wobei der Schweißschritt das Stumpfschweißen des ersten Elements (2) an das zweite Element (3) umfasst.

9. System zum Herstellen eines Moduls (1) für eine Airframe- oder Rumpfstruktur (F) eines Flugzeugs (A) oder Raumfahrzeugs, das Folgendes umfasst:
einen Rahmen zum Positionieren und Halten eines ersten Elements (2) mit Bezug auf ein benachbartes zweites Element (3) ;
einen Schweißkopf zum Erzeugen einer Schweißfuge (4) zwischen dem ersten Element (2) und dem zweiten Element (3), die durch den Rahmen gehalten werden;
einen Behandlungskopf, insbesondere einen Laserstoßstrahlkopf, zum Korrigieren oder Kompensieren eines Verziehens (D) in dem Modul, das durch ein Schweißen verursacht wird;
**gekennzeichnet durch**:
eine Vorrichtung zum Abfühlen oder Messen des Verziehens (D) des ersten und/oder des zweiten Elements (2, 3) während des Schweißens;
eine Computersteuereinheit zum Steuern des Laserstoßstrahlkopfes auf der Basis des abgefühlten oder gemessenen Verziehens des Moduls, die gemessene oder zuvor gewonnene experimentelle Daten des Schweißens sind; und
wobei die Sensorvorrichtung oder die Messvorrichtung das Verziehen abfühlt und misst, das in dem Modul (1) infolge des Schweißens während und/oder nach dem Schweißen aufgrund einer Klemmreaktionskraft des Haltens in dem Rahmen an dem Modul (1) auftritt,

10. System nach Anspruch 9, wobei der Schweißkopf einen Laser oder Laseremitter zum Laserstrahlschweißen (LBW) umfasst, wobei der Laserstoßstrahlkopf in dem Schweißkopf enthalten ist.

11. System nach Anspruch 9 oder Anspruch 10, wobei der Rahmen eine Klemmvorrichtung zum Halten des ersten Elements (2) umfasst, das an dem zweiten Element (1) festgeklemmt oder fixiert ist.

12. System nach Anspruch 11, wobei die Computersteuereinheit den Laserstoßstrahlkopf auf der Basis des abgefühlten oder gemessenen Verziehens (D) des Moduls (1) steuert.

## Revendications

1. Procédé de fabrication d'un module (1) pour une structure de cellule ou de fuselage (F) d'un aéronef (A) ou d'un engin spatial, comprenant les étapes consistant à :
positionner et abloquer un premier élément (2) de manière adjacente à un second élément (3) dans un châssis d'un poste d'assemblage (S) ;
souder le premier élément (2) au second élément (3) dans le poste d'assemblage (S) pour produire un module (1) ayant un joint soudé (4) entre les premier et second éléments (2, 3) ;
grenailler, en particulier par grenaillage au laser, au moins l'un du premier élément (2), du second élément (3), et du joint soudé (4) dans le poste d'assemblage (S) pour corriger ou compenser la distorsion (D) provoquée par le soudage ;
et **caractérisé par** les étapes suivantes :
détecter ou mesurer la distorsion (D) de l'un ou des deux des premier et second éléments (2, 3) pendant le soudage avec un dispositif de détection ou un dispositif de mesure ;
commander le grenaillage sur la base de la distorsion détectée ou mesurée du module, qui sont des données expérimentales mesurées ou préalablement acquises du soudage ; et ;
dans lequel le dispositif de détection ou le dispositif de mesure détecte et mesure la distorsion (D) apparaissant dans le module (1) suite au soudage d'au moins l'un de pendant et/ou après le soudage sur la base d'une force de réaction d'ablocage du maintien dans le châssis sur le module (1).

2. Procédé selon la revendication 1, dans lequel l'étape de grenaillage est effectuée avant, pendant et/ou après l'étape de soudage.

3. Procédé selon la revendication 2, dans lequel le premier élément (2) est un élément raidisseur, tel qu'un élément allongé avec une section transversale ou un profil transversal régulier ; et dans lequel le second élément (3) est un élément de surface, tel qu'un panneau, avec une surface principale à deux ou trois dimensions.

4. Procédé selon l'une quelconque des revendications 1 à 3, dans lequel l'étape de grenaillage comprend de générer des contraintes de compression résiduelles dans une région de surface du module, de préférence par l'un quelconque ou plusieurs d'un grenaillage au laser, d'un grenaillage de précontrainte, et d'un sablage ; et/ou
dans lequel le grenaillage au laser comprend de générer une onde de choc (6) dans une région d'au moins l'un du premier élément (2), du second élément (3), ou du joint soudé (4) par un faisceau laser (5), de sorte qu'une pression maximale de l'onde de choc (6) dépasse une limite d'élasticité dynamique d'un matériau du module.

5. Procédé selon l'une quelconque des revendications 1 à 4, dans lequel l'étape de grenaillage comprend de transmettre des impulsions de faisceau laser à au moins l'un du premier élément (2), du second élément (3), et/ou du joint soudé (4) du module à travers un revêtement (7) et/ou un recouvrement (8), dans lequel le recouvrement (8) comprend de préférence une couche de liquide, telle que de l'eau.

6. Procédé selon l'une quelconque des revendications 1 à 5, comprenant de :
abloquer le premier élément (2) sur le second élément (3) pendant l'étape de soudage ; et
mesurer ou détecter une distorsion (D) du module (1) pendant et/ou après l'étape de soudage à partir d'une force de réaction d'ablocage.

7. Procédé selon l'une quelconque des revendications 1 à 6, comprenant de :
mesurer ou détecter une distorsion (D) du module (1) pendant et/ou après l'étape de soudage ; et
commander le grenaillage sur la base de la distorsion mesurée ou détectée (D) du module (1).

8. Procédé selon l'une quelconque des revendications 1 à 7, dans lequel l'étape de soudage du premier élément (2) au second élément (3) comprend au moins l'un du soudage par faisceau laser (LBW) et du soudage par friction-malaxage (FSW) ; et/ou dans lequel l'étape de soudage comprend le soudage bout à bout du premier élément (2) au second élément (3) .

9. Système de fabrication d'un module (1) pour une structure de cellule ou de fuselage (F) d'un aéronef (A) ou d'un engin spatial, comprenant :
un châssis pour positionner et maintenir un premier élément (2) par rapport à un second élément adjacent (3) ;
une tête de soudage pour produire un joint soudé (4) entre le premier élément (2) et le second élément (3) maintenus par le châssis ;
une tête de traitement, en particulier une tête de grenaillage par choc laser, pour corriger ou compenser une distorsion (D) dans le module provoquée par une soudure ;
**caractérisé par** :
un dispositif pour détecter ou mesurer la distorsion (D) de l'un ou des deux des premier et second éléments (2, 3) pendant le soudage ;
un contrôleur d'ordinateur pour commander la tête de grenaillage par choc laser sur la base de la distorsion détectée ou mesurée du module, qui sont des données expérimentales mesurées ou précédemment acquises du soudage ; et
dans lequel le dispositif de détection ou le dispositif de mesure détecte et mesure la distorsion apparaissant dans le module suite au soudage d'au moins l'un de pendant et/ou après le soudage sur la base d'une force de réaction d'ablocage du maintien dans le châssis sur le module (1).

10. Système selon la revendication 9, dans lequel la tête de soudage comprend un laser ou un émetteur laser pour le soudage par faisceau laser (LBW), dans lequel la tête de grenaillage par choc laser est incluse dans la tête de soudage.

11. Système selon la revendication 9 ou la revendication 10, dans lequel le châssis comprend un dispositif d'ablocage pour maintenir le premier élément (2) abloqué ou fixé au second élément (1).

12. Système selon la revendication 11, dans lequel le contrôleur d'ordinateur commande la tête de grenaillage par choc laser sur la base de la distorsion (D) détectée ou mesurée du module (1).
